## Europäisches Patentamt
## European Patent Office
## Office européen des brevets

(19)

(11) Numéro de publication: **0 065 454**
**B1**

(12) # FASCICULE DE BREVET EUROPEEN

(45) Date de publication du fascicule du brevet:
31.10.84

(51) Int. Cl.³: **H 04 N 1/41, H 04 N 1/00**

(21) Numéro de dépôt: 82400826.2

(22) Date de dépôt: 05.05.82

(54) Procédé et dispositif pour la recréation d'un signal analogique de luminance à partir d'un signal numérique.

(30) Priorité: 08.05.81 FR 8109240
09.07.81 FR 8113482

(43) Date de publication de la demande:
24.11.82 Bulletin 82/47

(45) Mention de la délivrance du brevet:
31.10.84 Bulletin 84/44

(84) Etats contractants désignés:
AT BE CH DE GB IT LI LU NL SE

(56) Documents cités:
WO - A - 80/00645
WO - A - 80/00646
DE - A - 2 402 513
FR - A - 2 124 532
FR - A - 2 125 532
FR - A - 2 374 796
FR - A - 2 396 478
US - A - 2 921 124
US - A - 3 071 727
US - A - 3 673 322
US - A - 3 678 388
US - A - 3 688 039
US - A - 3 902 008
US - A - 4 153 916

(73) Titulaire: **Organisme Autonome doté de la personnalité Civile AGENCE FRANCE-PRESSE, 13 Place de la Bourse, F-75002 Paris (FR)**

(72) Inventeur: **Guerillot, Stéphane, 17, Avenue du Docteur Arnold Netter, F-75012 Paris (FR)**
Inventeur: **Regnault, Alain, 1, rue Lyautey, F-75016 Paris (FR)**
Inventeur: **Dureigne, Bernard, Résidence la Croix du Sud 4 Allée Maryse Hilsz, F-94150 Chevilly-Larue (FR)**

(74) Mandataire: **de Saint-Palais, Arnaud Marie et al, Cabinet Brot 83, rue d'Amsterdam, F-75008 Paris (FR)**

(56) Documents cités: (suite)
NATIONAL TELECOMMUNICATIONS CONFERENCE NTC 73, 26-28 novembre 1973, pages 12C-1-12C-6, édité par "The Institute of electrical and electronics engineers", Atlanta, Georgia, (USA); K.P. WACKS: "Filter design for real-time facsimile transmission" RUNDFUNKTECHNISCHE MITTEILUNGEN, vol. 19, no. 5, septembre 1975, pages 194-199, Munich, (DE); VON KARL-HEINZ TRISSEL: "Taktregenerierung und Worterkennung bei einem seriellen Video-PCM-Signal"

BUNDESDRUCKEREI BERLIN

## Description

La présente invention concerne un procédé de traitement déductif, a posteriori, en vue de recréer un signal analogique de luminance à partir d'un signal numérique servant à la transmission, après conversion analogique numérique d'un signal de luminance représentatif d'un document à transmettre.

Elle s'applique plus particulièrement, mais non exclusivement, à la transmission numérique de documents iconographiques émis et reçus par une méthode de type »Belin« grâce à l'ajout de circuits convertisseurs analogiques numériques et numériques analogiques.

On rapelle que dans les méthodes de transmission de type »Belin« employées jusqu'à ce jour, le document à transmettre est enroulé, sans recouvrement sur un cylindre qui est animé d'un mouvement rotatif, et un lecteur, (cellule photosensible, tube photomultiplicateur, etc...) solidaire d'une platine se déplaçant sur un axe parallèle à l'axe du cylindre est occulté par la lumière réfléchie du document éclairé, à la focale dudit lecteur.

D'une façon analogue, à la réception, le document est reproduit, sur un support sensible entraîné par un cylindre animé d'un mouvement rotatif, au moyen d'un dispositif d'écriture se déplaçant sur un axe parallèle à l'axe du cylindre et commandé par le signal analogique détecté à la sortie de la ligne de transmission.

De façon plus précise, dans le cas où la transmission du signal le long de la ligne s'effectue par voie numérique, à l'émission, le signal analogique représentant le document à transmettre est un signal de luminance qui module une porteuse en modulation d'amplitude ou de fréquence. La bande passante de ce signal analogique est alors limitée par les cellules photo-électriques du lecteur et par la résolution des émettrices. Il est à noter que cette bande passante peut être limitée à 800 Hz sans apporter de graves altérations (un filtrage du signal traité à 800 Hz n'apporte pas de dégradation visible dans la qualité des images reçues).

Le signal de luminance est, après démodulation, analysé à une fréquence f qui reste fonction de la rapidité de modulation utilisée ($\Phi$) et du nombre de bits de quantification (n) selon la relation:

$$f = \frac{\Phi}{n}$$

par exemple avec

$\Phi = 4800$ bauds ou 9600 bauds et

n = 4 ou 5 bits.

Cette fréquence f représente la fréquence d'échantillonnage ce qui, d'après le théorème de Shannon, est trop faible lorsque l'on travaille à 4800 bauds avec un nombre de bits > 4. Le signal restitué devrait, dans ce cas, présenter de fortes distorsions mais ce serait oublier ou faire abstraction des caractéristiques propres au signal de luminance.

Si l'on considère la photo à transmettre, celle-ci est constituée de lignes parallèles qui sont en fait une succession continue de points ou pixels.

Le nombre de points est fonction directs de la bande passante puisque limité par la résolution des émettrices (ce nombre est égal à deux fois la bande passante).

Ainsi, en un tour/s du cylindre émetteur, on a une définition d'environ 1600 points alors qu'en 2 tours/s elle est restreinte à 800 points.

Lorsqu'on a choisi les modalités de traitement ($\Phi$ et n) la fréquence d'échantillonnage est définie par

$$f = \frac{\Phi}{n} \, .$$

Les données du problème sont fixées et il convient de traiter le signal de luminance afin qu'il puisse être analysé, mémorisé, transmis et reconstitué sans altération notoire.

Lorsque la photo est transmise à la vitesse de 1 tour par seconde, chaque ligne est analysée avec un incrément, ce qui revient à dire que l'on a une définition de 960 points ou pixels (avec $\Phi = 4800$ bauds et n = 5 bits).

Le nombre de points correspond au nombre d'échantillons par tour de cylindre et est donc égal à f divisé par le nombre de tour/s. Comme la ligne a une certaine longueur (exemple L = 200 mm), il est possible de calculer l'intervalle qui sépare chaque point

$$\left( \text{exemple } \frac{L}{f} = 0{,}21 \text{ mm} \right)$$

et d'en déduire que les détails qui auront une finesse inférieure peuvent être (ceci étant une question de probabilité) absents de la photo restituée. Par ailleurs, il convient de remarquer que la finesse que l'on obtient est meilleure que celle obtenue par les appareils en 2 tours/s analogiques.

Le problème est nettement plus ardu pour des photos transmises à une vitesse de 2 tours/s; la fréquence d'échantillonnage restant inchangée, on a une finesse de 960 points, mais cette fois-ci pour l'analyse de deux lignes, donc 480 points par ligne, ce qui est nettement insuffisant puisque les détails qui échappent à l'analyse ont cette fois une dimension maximale supérieure à 0,4 mm.

L'image reconstituée aura un aspect de mosaïque aux traits grossiers puisque chaque pixel occupera, en fin de compte, un petit rectangle de près de 0,43 mm de long avec une densité constante.

Une première solution à apporter est d'effectuer une intégration des pixels avant l'échantillonnage et donc entre deux quantifications (conversion A/N). Comme décrit dans la demande de brevet FR 8 109 240 du 8 Mai 1981, au nom de la Demanderesse, il faut calculer la densité moyenne du pixel et c'est cette valeur moyenne qui est transmise de façon numérique (après quantification).

Dans le cas de l'utilisation d'un microprocesseur, ce dernier, en prenant par exemple des échantillons à la fréquence de base choisie (4800 ou 9600 Hz), celle-ci étant cohérente par rapport au théorème de Shannon, devra calculer la valeur moyenne des échantillons formant le pixel, quantifier cette moyenne et la transmettre après une conversion linéaire/logarithmique.

Cette méthode présente l'énorme avantage de faire apparaître les détails les plus fins qui sont présents, de façon implicite, dans le signal transmis, même si leur valeur a été compressée par l'intégration. La notion de probabilité et de hasard a ainsi été éliminée.

Une deuxième solution à apporter consiste à appliquer un véritable traitement de signal au niveau de la partie réception du système. Il faut rappeler que la bande passante du signal analogique peut être réduite à 800 Hz et que, dans le cas le plus défavorable (2 tours/s) on a 480 échantillons par ligne et donc 480 pixels.

Afin de supprimer l'effet de mosaïque on doit donc traiter le signal à la réception. Ce traitement peut être fait en analogique, donc après conversion N/A ou bien en numérique, avant cette même conversion.

Les défauts majeurs auxquels il faut en outre remédier sont au nombre de quatre:

1. Détérioration des transitions franches du signal analogique pour des différences d'amplitudes importantes donc pour les limites entre zones contrastées.
2. Détails fins qui ont été écrasés lors du traitement à l'émission, mais qui existent de façon implicite.
3. Effet de contours de zones lors des dégradés, contours que l'on rencontre lors du passage d'un niveau de quantification à un niveau adjacent.
4. Effet gênant de mosaïque.

L'invention a donc pour but de trouver une solution permettant de supprimer ces défauts.

A cet effet, elle se base sur le fait que la caractéristique la plus importante du signal analogique de luminance (à l'émission) est le temps de montée tm (10 %—90 %) qui, dans le cas d'une vitesse de rotation du cylindre de 2 tours/s est d'environ 550 $\mu$s (en 1 tours/s il est supérieur à tm 700 $\mu$s).

Compte tenu de cette caractéristique, si l'on compare le signal analogique et le signal après numérisation, on peut en déduire que durant le temps d'intégration d'un pixel, il ne peut y avoir plus de deux intersections du signal analogique avec sa valeur moyenne.

L'invention utilise cette propriété qui autorise, contrairement aux autres traitements selon lesquels on anticipe à l'émission, un traitement déductif à la réception, c'est-à-dire un traitement a posteriori et non un procédé-prédictif.

L'avantage de ce procédé est d'éviter l'emploi de mémoires complexes et onéreuses et, du fait que chaque pixel est quantifié unitairement et que conjointement la transmission est synchrone, d'assurer une immunité presque totale aux parasites.

Il faut rappeler que la partie réception de l'appareil comprend aussi la fonction inverse de la conversion linéaire/logarithme précédemment mentionnée.

Ainsi, dans le but de recréer les transitions franches du signal analogique, le procédé selon l'invention consiste à prendre en compte, avant ou après la conversion N/A de la réception et, de préférence, avant la conversion log/lin de la réception, p pixels successifs et, en fonction de leurs amplitudes relatives et absolues, traiter le pixel central en le décomposant en m »sous pixels« qui auront des poids (donc des densités) fonction de ceux des pixels environnants.

A cet effet, la valeur moyenne de densité du pixel initial à traiter pourra être conservée et être redistribuée sur les sous pixels correspondants recrées, selon la relation:

$$C = \frac{\sum_{j=1}^{m} Cj}{m}$$

dans laquelle:

C  représente l'amplitude absolue du pixel central à traiter,
Cj  représente l'amplitude des sous pixels créés,
m  représente le nombre de sous pixels.

On parvient ainsi à affiner la taille du pixel et à créer des niveaux intermédiaires de quantification. Ce procédé résout donc, dans un même temps, les problèmes de mosaïque et de contours de zones.

De façon plus précise et, selon un premier mode d'exécution de l'invention, le nombre de pixels pris en compte est au moins égal à trois, à savoir le pixel P à traiter, le pixel précédent P-1 et le pixel suivant P + 1, le pixel P faisant un écart de quantification x par rapport au pixel P-1 et un écart de quantification y par rapport au pixel P + 1.

La quantification des sous pixels créés pour le traitement du pixel P s'effectue alors comme suit:

● Dans le cas où le produit xy est égal à zéro, les valeurs des amplitudes Cj des sous pixels sont inchangées et demeurent égales à l'amplitude absolue P à traiter.
● Dans le cas où le produit x · y est positif, les valeurs des amplitudes Cj des sous pixels sont calculées de manière à assurer une transition en palier entre les pixels P-1 et P + 1, dont l'allure déterminée expérimentalement varie en fonction de l'écart entre les valeurs x et y.
● Dans le cas où le produit x · y est négatif, les valeurs des amplitudes Cj des sous pixels sont calculées de manière à assurer une recréation de détails fins par une transition présentant un maximum ou un minimum dont la forme, déterminée expérimentalement, varie en fonction de l'écart entre les valeurs x et y.

Selon un deuxième mode d'exécution de l'invention, le nombre de pixels pris en compte est égal à cinq pixels significatifs, à savoir, le pixel P à traiter, précédé par les pixels P-1 et P-2 et suivi par les pixels P + 1 et P + 2, le pixel P faisant un écart de quantification x par rapport au pixel P-1 et un écart de quantification y par rapport au pixel P + 1, tandis que le pixel P-2 fait un écart de quantification $\alpha$ avec le pixel P-1 et le pixel P + 2, un écart de quantification $\beta$ avec le pixel P + 1.

La quantification des sous pixels créés pour le traitement du pixel P s'effectue alors comme suit:

● Dans le cas où l'écart de quantification x est égal à zéro, comme dans le mode d'exécution précédent, les valeurs des amplitudes Cj des sous pixels sont inchangéés et demeurent égales à l'amplitude absolue du pixel P à traiter.
● Dans le cas où l'écart de quantification est différent de zéro, plusieurs solutions sont alors envisagées:

a)   le produit x · y est égal à zéro

   —   si $\beta$ x = 0 les valeurs des amplitudes Cj des sous pixels sont inchangées et demeurent égales à l'amplitude absolue du pixel P à traiter sauf le cas où l'écart de quantification |x| est inférieur ou égal à une valeur prédéterminée (par exemple 1). Dans ce cas, les amplitudes Cj varieront selon l'équation linéaire:

$$Cj = C - \frac{m+1-j}{m+1} \, x$$

dans laquelle

   C   est l'amplitude absolue du pixel P,
   j   est le numéro du sous pixel,
   m   est le nombre de sous pixels du pixel P.

   —   si $\beta$ x > 0 les valeurs des amplitudes Cj des sous pixels sont inchangées et demeurent égales à l'amplitude du pixel P à traiter.
   —   si $\beta$ · x < 0 les valeurs des amplitudes Cj des sous pixels sont calculées de manière à assurer une recréation de détails fins pour les pixels P et P + 1 à la fois, car on est alors en présence de points doubles;

b)   dans le cas où x · y est négatif, les valeurs des amplitudes Cj des seus pixels sont calculées de manière à assurer une recréation de détails fins pour le pixel P et, éventuellement, pour les pixels P et P + 1;
c)   dans le cas où x · y est positif, les valeurs des amplitudes Cj des sous pixels sont calculées de manière à assurer une transition en palier entre P-1 et P + 1 comme précédemment mentionné.

Il est à noter que pour des raisons de simplification dans les horloges, le nombre de sous-pixels m peut être avantageusement choisi égal au nombre de bits de quantification n. Par ailleurs, pour avoir un système performant il faut que le nombre m soit supérieur ou égal à 3 (m ≥ 3).

Toutefois, il existe certains cas qu'il est impossible de traiter convenablement. Ces cas sont limités à c'es variations faibles du signal analogique, mais à des fréquences élevées (supérieures à 480 Hz pour

# 0 065 454

les 2 tours et 960 Hz pour le 1 tour). On a pu constater que sur une image classique, les cas d'exception sont très rares et que le traitement n'apporte pas de dégradation supplémentaire par rapport à un signal non traité.

L'invention a également pour objet l'application du procédé précédemment décrit à un dispositif pour la recréation après transmission numérique d'un signal analogique tel que, par exemple le signal issu d'un analyseur de type Belin, ce système comprenant:

a) Au niveau de la partie émettrice:

- Un convertisseur linéaire/logarithmique recevant ledit signal analogique préalablement démodulé.
- Un ensemble formé par deux intégrateurs montés en parallèle à la sortie dudit convertisseur, et travaillant en alternance, cet ensemble permettant d'intégrer la totalité du signal de luminance que délivre chaque pixel.
- Un convertisseur analogique-numérique relié à la sortie du susdit ensemble par l'intermédiaire d'un échantillonneur bloqueur destiné à stocker le signal fourni par l'un ou l'autre des deux intégrateurs pendant le temps nécessaire à la conversion analogique numérique relative à chaque pixel, et
- Un interface parallèle/série permettant de sérialiser le signal numérique représentant la valeur de chacun des pixel et de le transmettre à un multiplexeur et/ou un modem permettant d'attaquer la ligne de transmission selon les normes en vigueur.

b) Au niveau de la partie réceptrice.

- Un convertisseur série/parallèle recevant le signal numérique série émanant de la ligne de transmission.
- Un convertisseur numérique-analogique relié à la sortie du convertisseur série-parallèle.
- Un convertisseur logarithme-linéaire permettant de traiter le signal obtenu par le convertisseur numérique-analogique de manière à obtenir en sortie un signal exponentiel, identique eu signal analogique démodulé transmis à l'entrée de la partie émettrice et une unité de calcul et de traitement appliquant le procédé selon l'invention et pouvant être situé en amont ou en aval du convertisseur numérique-analogique.

Selon une autre caractéristique de l'invention, le signal modulé fourni par l'émetteur est transmis au convertisseur linéaire/logarithme par l'intermédiaire d'un circuit de démodulation, de détection de blanc et de mise à niveau, ce circuit comprenant: en série entre l'émetteur et le convertisseur linéaire-logarithmique, un amplificateur à gain variable et un redresseur double alternance, un dispositif de commutation étant prévu entre le redresseur double alternance, le convertisseur linéaire-logarithmique et/ou la ligne de transmission.

Dans ce cas, l'invention prévoit un circuit agissant sur le dispositif de commutation pour interrompre la liaison entre le redresseur double alternance et le convertisseur linéaire logarithmique en l'absence d'une émission de l'émetteur.

Un circuit est également prévu pour:

- détecter la présence d'un signal de blanc émis au début de l'émission;
- d'ajuster le gain de l'amplitude à gain variable pour que celui-ci délivre un signal dont l'amplitude soit égale à la valeur maximale que puisse admettre le convertisseur analogique-numérique:
- de mémoriser le signal déterminant le gain de l'amplificateur de sorte que ce gain reste identique tout au long de la transmission, et
- à connecter la liaison entre le redresseur double alternance et le convertisseur linéaire-logarithmique lorsque le verrouillage du gain de l'amplificateur est réalisé.

La partie émettrice peut en outre comprendre un circuit permettant de générer, après le susdit verrouillage de gain et avant le traitement numérique du document.

a) un mot binaire redondant servant de signal de synchronisation à la partie réceptrice pour que celle-ci puisse reconnaître le début et la fin d'un mot binaire quantifiant un pixel.
b) éventuellement un mot de reconnaissance généralement dénommé SECAL qui, suivant le code employé pourra ou non autoriser le récepteur à recevoir le message.

Dans ce cas, la partie réceptrice peut elle même comprendre:

- Un circuit permettant de décoder le mot de reconnaissance qui, suivant le code employé autorisera ou non le récepteur à recevoir le signal transmis par la ligne.

5

**0 065 454**

— Un décodeur de mot de synchronisation destiné à transmettre un signal de remise à zéro de l'horloge pilotant le convertisseur numérique-analogique.

Un circuit de traitement déductif conforme au procédé selon l'invention, ce circuit venant se monter soit après le convertisseur N/A ou bien avant ce convertisseur.

Des modes de réalisation de l'invention seront décrits ci-après à titre d'exemples non limitatifs, avec référence aux dessins annexés dans lesquels:

Les figures 1 et 2 représentent respectivement les schémas-blocs de la partie émettrice et de la partie réceptrice d'un système pour la transmission numérique de documents iconographiques émis et reçus par une méthode de type Belin;

La figure 3 est un diagramme tension en fonction du temps d'un signal source analogique et du signal numérisé correspondant;

La figure 4 est un diagramme tension en fonction du temps d'un signal numérisé, ce diagramme permettant de présenter les variables;

La figure 5 est un diagramme tension en fonction du temps d'un signal numérisé dans lequel le pixel central est décomposé en sous pixels;

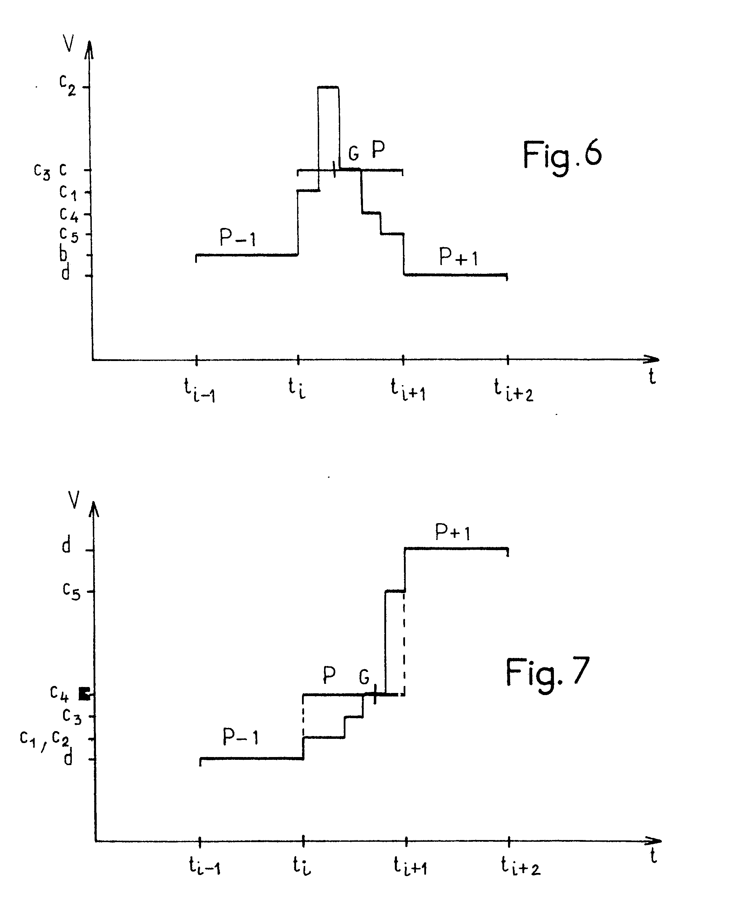

La figure 6 est un diagramme en fonction du temps permettant d'illustrer le principe de recréation de détails fins;

La figure 7 est un diagramme tension en fonction du temps permettant d'illustrer une décomposition en paliers.

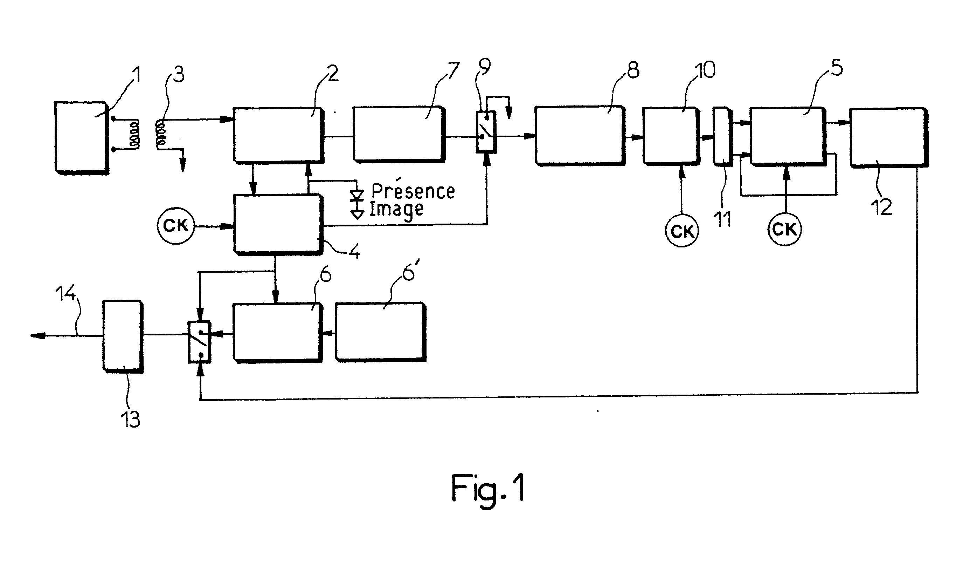

Avec référence à la figure 1, le signal issu de l'émetteur 1 (par exemple une porteuse de 1800 Hz modulée en amplitude) est appliqué à l'entrée d'un amplificateur à gain variable 2 à travers un transformateur d'isolement 3.

Au bout de trois secondes de signal blanc ininterrompu envoyé par l'émetteur 1, le circuit 4 détecte la présence de début de transmission et ajuste le gain de l'amplificateur 2 pour que celui-ci délivre un signal dont l'amplitude soit égale à la valeur maximale que puisse admettre le convertisseur analogique-numérique 5, ceci afin que le signal d'amplitude maximale correspondant au »blanc« délivré par l'émetteur 1, corresponde bien à la valeur numérique la plus élevée que puisse fournir le convertisseur analogique-numérique 5. Toutefois, dans le cas où le signal de lecture du document présenterait une amplitude de blanc, supérieure à celle déterminée à l'origine par le signal de blanc, un écrêteur peut être prévu pour aligner cette amplitude au niveau de blanc préalablement établi. Le signal déterminant le gain de l'amplificateur 2 est mémorisé de sorte que ce gain reste identique tout au long de la transmission du document.

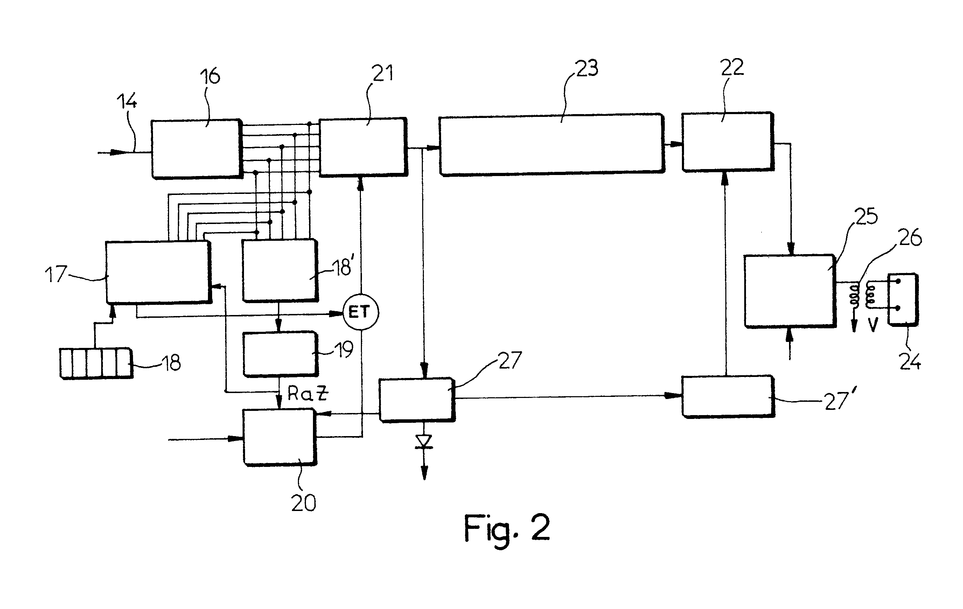

Dès que ce verrouillage de gain est réalisé, un circuit 6 génère un mot binaire redondant qui servira de signal de synchronisation à la partie réceptrice (figure 2) pour que celle-ci puisse reconnaître le début et la fin d'un mot binaire quantifiant un pixel. A la sortie de l'amplificateur 2, est relié un redresseur double alternance avec filtre passe-bas 7 destiné à démoduler le signal de luminance de la porteuse à 1800 Hz.

Le signal analogique démodulé fourni par le redresseur 7 est transmis à un convertisseur linéaire-logarithmique 8 par l'intermédiaire d'un dispositif de commutation 9.

Ce convertisseur 8 a pour but de linéariser le signal de luminance. En effet, celui-ci est lié de façon exponentielle aux différents gris allant du noir au blanc, du document. Le fait de linéariser ce rapport permet de quantifier chaque pixel avec 5 bits seulement.

Le convertisseur 8 est relié par sa sortie à un intégrateur double 10 dont chaque section travaillant alternativement permet d'intégrer tout le signal de luminance que délivre chaque pixel. Cette méthode élimine l'incertitude d'intégration qui serait due au temps nécessaire pris par un intégrateur simple pour revenir à zéro avant chaque nouvelle intégration de signal de luminance de pixel.

Dès que cette intégration est terminée, le signal est transféré dans un échantillonneur bloqueur 11 et stocké dans cet échantillonneur 11 le temps que le convertisseur analogique numérique 5 faisant suite ait fini sa conversion. Le signal numérique représentant la valeur du pixel est ensuite sérialisé par l'interface parallèle/série 12 et envoyé en sortie du système vers un multiplexeur et ou un modem 13 permettant d'attaquer la ligne 14 selon les normes en vigueur.

Dans cet exemple de réalisation, la fréquence horloge pilotant le convertisseur analogique-numérique 5 et l'interface parallèle/série 12, est égale à 4800 Hz, fréquence fournie par le modem émetteur 13, divisé de façon synchrone par N, N étant le nombre de bits binaires composant le mot binaire quantifiant un pixel.

On obtient donc une transmission synchrone des informations binaires, c'est-à-dire sans bits supplémentaires de début et de fin.

Dans la partie réceptrice représentée figure 2, le signal numérique série transmis par la ligne 14 est appliqué à l'entrée d'un convertisseur/série parallèle de 5 bits (registre à décalage 16). Les signaux issus de ce convertisseur 16 sont reçus par un décodeur de mot binaire de reconnaissance 17 émis par le bloc 6 (figure 1) qui, suivant le code 18 employé, autorisera ou non la partie réceptrice à prendre le document. Parallèlement, un décodeur de mot de synchronisation 18 déclenche sur ce mot de synchronisation, après validation 19, un signal qui est appliqué à l'entrée remise à zéro d'un compteur 20 diviseur par cinq de la fréquence horloge du modem 13 (4800 Hz). La sortie de ce compteur 20 commande l'acquisition par le convertisseur numérique-analogique 21 du signal présent sur ses entrées.

6

0 065 454

Les mots binaires appliqués au convertisseur numérique-analogique seront pris en compte de façon synchrone aux mots binaires générés par l'émetteurs.

Le signal ainsi obtenu est, à la reconstruction numérique près, l'image analogique du signal émis. Ce signal est ensuite traité par le convertisseur logarithmique/linéaire 22, et par une unité de calcul et de traitement 23 appliquant le procédé selon l'invention. Ce signal exponentiel module ensuite une porteuse par exemple à 1 800 Hz, dans le modulateur 25, et le signal est dirigé vers l'appareil restitueur 24 par l'intermédiaire d'un transformateur d'isolemant 26. Ce signal est donc identique au signal analogique modulé qui a été délivré par l'émetteur 1.

Afin d'éviter les interférences qui se traduisent par des moirages sur le document reconstitué le modulateur 25 est asservi au signal d'horloge du modem 13.

Quand l'appareil émetteur a fini l'analyse du document, le signal à 1 800 Hz disparaît. A ce moment un circuit 27 de détection image, court-circuite la sortie du convertisseur 22 de sorte que le niveau de modulation du circuit 25 soit alors à −50 dB, (bloc 27') l'appareil restitueur ne prenant un signal qu'au-dessus de −37 dB, enregistre alors la fin de transmission.

Il convient de noter que dans le système de transmission précédemment décrit, la lecture ligne par ligne des documents peut être réalisée selon un autre principe que celui du procédé »BELIN«.

Par ailleurs, un avantage important du système selon l'invention est qu'il autorise des fréquences d'horloge variées sans que le fonctionnement du système se trouve pertubé.

En outre la réalisation de ce système de transmission peut être effectuée à l'aide de microprocesseur.

Dans ce cas l'ordre des traitements effectués sur le signal se trouve modifié de la façon suivante:

— dans la partie réceptrice, tous les traitements effectués sur le signal s'effectueront en amont du convertisseur numérique-analogique 21;
— dans la partie émettrice, les traitements effectués sur le signal s'effectueront en aval du convertisseur analogique numérique 5.

On notera tout d'abord que le diagramme de la figure 1 a été représenté pour illustrer le fait que, comme précédemment mentionné durant le temps d'intégration d'un pixel, il ne peut y avoir plus de deux intersections du signal analogique (signal source analogique z(t) avec sa valeur moyenne [signal numérisé Z(t)].

On rappelle à ce sujet que ces deux signaux satisfont à la relation suivante:

$$Z(t_i) = \int_{t_i}^{t_{(i+1)}} z(t)dt$$

dans laquelle

$t_i$    représente les instants d'échantillonnage et avec

$$t(i+1) - t_i = \frac{1}{f}$$

f    étant la fréquence d'échantillonnage.

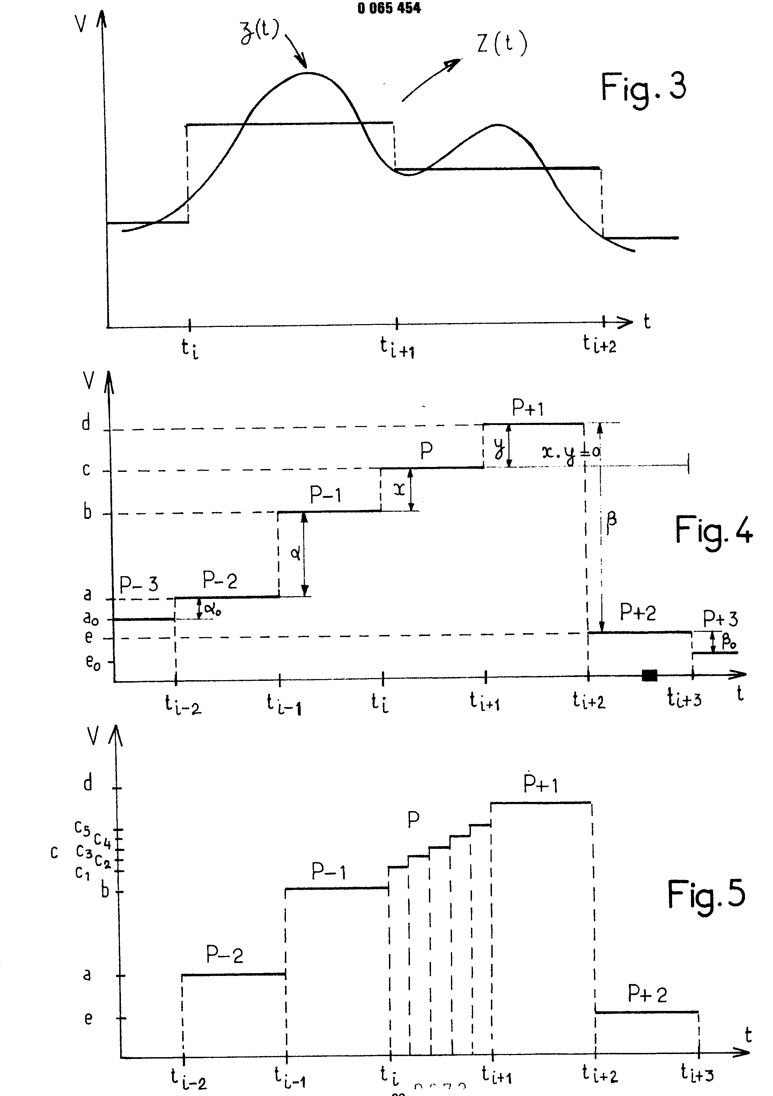

Le nombre de pixels pris en compte pour le traitement du signal, dans les figures 4 et 5, a été choisi égal à 7, ce qui semble correspondre au meilleur compromis entre l'efficacité et la complexité de l'algorithme de traitement.

Toutefois, sur ces 7 pixels P-3, P-2, P-1, P, P + 1, P + 2, P + 3, les pixels les plus significatifs sont les cinq pixels centraux P-2, P-1, P, P + 1, P + 2, les deux pixels d'extrémités P-3, P + 3 ne servant que dans un nombre de cas limités.

Il convient de souligner que, réduit à trois pixels (P-1, P, P + 1), le traitement, bien que plus faible, apporte déjà une forte amélioration de la qualité du signal restitué et de la reproduction de l'image. Un tel traitement sera, de toutes façons, décrit dans la suite de la description.

Les variables intervenant dans le traitement du signal numérisé représenté figures 2 et 3 sont les suivantes:

— la fréquence de base $\Phi$ choisi par exemple à 4800 Hz,
— le nombre p de pixels pris en compte qui est 7,
— le nombre m de sous pixels du pixel central P qui est égal à 5,
— le nombre n de bits de quantification qui est pris égal à 5,
— les amplitudes absolues des pixels pris en compte qui seront notées dans l'ordre $a_0$, a, b, c, d, e, $e_0$,
— les écarts entre les niveaux de quantification qui seront notés $a_0$, $\alpha$, x, y, $\beta$, $\beta_0$, ces écarts satisfaisant aux relations:

7

$$\alpha_0 = a - a_0; \quad \alpha = b - a; \quad x = c - b; \quad y = d - c; \quad \beta = e - d; \quad \beta_0 = e_0 - e,$$

— l'amplitude Cj des 5 sous pixels crées pour le traitement du pixel central P dont l'amplitude absolue est C,

$$Cj = C_1, C_2, C_3, C_4, C_5.$$

### Algorithme de traitement à la réception

### A) Principe général

On notera tout d'abord que les écarts x et y définiront le type de traitement à appliquer alors que $\alpha$ et $\beta$ représenteront des paramètres; on n'utilise $\alpha_0$ et $\beta_0$ que dans des cas particuliers. Afin de maintenir les valeurs calculées entre les niveaux correspondant au noir photo et au blanc photo; on utilise l'amplitude C du pixel P pour pondérer l'efficacité du traitement. Ce dernier étant répétitif, il faut souligner que lese valeurs prises en compte à un instant t seront décalées d'un pixel pour le traitement correspondant à celui de l'instant suivant, d'où les égalités:

$$\alpha_{(t+1)} = \alpha_{0_{(t)}}; \quad x_{(t+1)} = \alpha_{(t)}; \quad y_{(t+1)} = x_{(t)}; \quad \beta_{(t+1)} = y_{(t)}.$$

### B) Type de traitement selon les valeurs des écarts x, y, et $\beta$

1. Dans le cas où x = 0, aucune modification n'est à apporter, c'est-à-dire que quel que soit j compris dans l'intervalle [1, 5], on aura l'égalité:

$$Cj = C$$

2. Dans le cas où x est différent de zéro, le type de traitement variera en fonction de la valeur et du signe du produit $x \cdot y$ et du produit $\beta \cdot X$.

   a) Dans le cas où $x \cdot y$ est égal à 0:

      — si $\beta \cdot x = 0$ il n'y aura de modification à apporter que si $x = \pm 1$, auquel cas, quel que soit j compris dans l'intervalle [1, 5] la relation suivante devra être satisfaite:

$$Cj = C - \frac{6-j}{6} \, x,$$

      — si $\beta \cdot x > 0$ aucune modification be sera apportée, c'est-à-dire que quel que soit j compris dans l'intervalle [1, 5] l'égalité Cj = C sera réalisée,

      — si $\beta \cdot x < 0$ on applique alors le traitement »recréation de détails fins« qui sera décrit ci-après, en regard de la figure 4, pour les deux pixels P et P + 1 à la fois, car on se trouve alors en présence de points doubles C = d.

   b) Dans le cas où $x \cdot y < 0$ on applique le traitement »recréation de détails fins« pour le pixel P et, éventuellement, dans certains cas, pour les pixels P et P + 1.

   c) Dans le cas où $x \cdot y > 0$ on applique un traitement »décomposition en paliers« qui sera décrit dans la suite en regard de la figure 5, afin de favoriser la transition entre les pixels P-1 et P + 1.

On constate donc qu'il suffit de définir deux traitements distincts qui sont:

— La »recréation de détails fins« ($x \cdot y < 0$ et points double).
— La »décomposition en paliers« ($x \cdot y > 0$).

### C) Décomposition en paliers ($x \cdot y > 0$)

Les 5 sous pixels recréés représentent la décomposition de la transition entre le niveau b et le niveau d. Ces sous niveaux ont des valeurs déterminées par des coefficients fonction des écarts x, y, $\alpha$, $\beta$. On notera que si $\alpha = 0$, ou $\beta = 0$ on les remplace respectivement dans les calculs par $\alpha_0$ et $\beta_0$.

Comme le traitement est itératif et qu'il ne concerne qu'un pixel à la fois, il faut que les recoupement entre les pixels représente une transition logique. On a donc été à définir le point correspondant au passage entre deux pixels successifs. Pour le traitement du pixel P, ce point $P_I$, aura pour coordonnées:

$$P_i(t_i, P_{(bc)}) \text{ avec} \begin{cases} P_{(bc)} = C + \varepsilon_{(bc)} \\ \\ \varepsilon_{(bc)} = -\dfrac{x\,|\,y\,|}{|\,y\,| + |\,\alpha\,|} \end{cases}$$

Ce point correspond alors au meilleur passage de courbe entre le pixel P-1 et le pixel P.

De la même façon, on peut définir le point de passage optimal pour la transition entre les pixels (c) et (d). Par rapport à (d) ce point $P_{(i+1)}$ aura pour coordonnées:

$t_{i+1}$ en abscisse

$$P_{(cd)} \text{ en ordonnée} \begin{cases} P_{(cd)} = d + \varepsilon_{(cd)} \\ \\ \varepsilon_{(cd)} = -\dfrac{y\,|\,\beta\,|}{|\,x\,| + |\,\beta\,|} \end{cases}$$

Pour le traitement du pixel P, il est nécessaire de connaître les coordonnées de ce point $P_{i+1}$ par rapport à P. Ce simple changement d'origine est obtenu en posant: d = C + y d'où:

$$P_{i+1}(t_{i+1} \cdot P_{(cd)}) \text{ avec} \begin{cases} P_{(cd)} = C + \varepsilon'_{(cd)} \\ \\ \varepsilon'_{(cd)} = \dfrac{y\,|\,x\,|}{|\,x\,| + |\,\beta\,|} \end{cases}$$

Maintenant que l'on connaît les deux valeurs $\varepsilon_{(bc)}$ et $\varepsilon'_{(cd)}$ on a borné les variations des sous pixels extrêmes et on peut, en fonction du rapport

$$\frac{\varepsilon_{(bc)}}{\varepsilon'_{(cd)}},$$

déterminé l'amplitude de tous les sous pixels à recréer. Toutefois, il existe deux cas d'exception dans lesquels les valeurs de $C_1$ ou de $C_5$ sortent des limites définies par $\varepsilon_{(bc)}$ et $\varepsilon'_{(cd)}$.

Ces cas sont déterminés par les deux tests suivants dans lesquels il faut souligner que si $\alpha$ ou $\beta$ sont nuls ils ne seront pas remplacés par $\alpha_0$ ou $\beta_0$.

● si $\boxed{\alpha \cdot x < 0}$ on remplace $\varepsilon_{(bc)}$ par x lorsque le rapport $\varepsilon_{(ab)}/\varepsilon'_{(bc)}$ sera supérieur à 1,4.

● si $\boxed{y \cdot \beta < 0}$ on remplace $\varepsilon'_{(cd)}$ par y lorsque le rapport $\varepsilon'_{(de)}/\varepsilon_{(cd)}$ sera supérieur à 1,4.

Il est évident que ces substitutions seront faites dans les calculs et les équations suivants:
Par convention on pose:

$$\bigvee_j \in [1,5], \ Cj = C + \varepsilon_j$$

on a donc

$$\sum_{j=1}^{5} j = 0$$

● $\left| \dfrac{\varepsilon'_{(cd)}}{\varepsilon_{(bc)}} \right| \geq 4$ on aura:

$$\begin{cases} \varepsilon_1 = \varepsilon_{(bc)} \\ \varepsilon_5 = -4_{\varepsilon_{(bc)}} \end{cases}$$

$\varepsilon_2 = \varepsilon_{bc}; \ \varepsilon_3 = \varepsilon_{bc}; \ \varepsilon_4 = \varepsilon_{bc}.$

● $4 \geq \left| \dfrac{\varepsilon'_{(cd)}}{\varepsilon_{(bc)}} \right| \geq \dfrac{3}{2}$ on aura:

$$\begin{cases} \varepsilon_1 = \varepsilon_{(bc)} \\ \varepsilon_5 = \varepsilon'_{(cd)} \end{cases}$$

$$\varepsilon_2 = \frac{1}{10}(6\,\varepsilon_1 - \varepsilon_5); \quad \varepsilon_3 = -\frac{1}{10}(2\,\varepsilon_1 + 3\,\varepsilon_5);$$

$$\varepsilon_4 = -\frac{1}{5}(7\,\varepsilon_1 + 3\,\varepsilon_5).$$

● $\quad \dfrac{3}{2} \geq \left| \dfrac{\varepsilon'_{(cd)}}{\varepsilon_{(bc)}} \right| \geq \dfrac{2}{3}$

$$\begin{cases} \varepsilon_1 = \varepsilon_{(bc)} \\ \varepsilon_1 = \varepsilon'_{(cd)} \end{cases}$$

$$\varepsilon_2 = -\frac{1}{2}\,\varepsilon_5; \quad \varepsilon_3 = -\frac{1}{2}(\varepsilon_1 + \varepsilon_5); \quad \varepsilon_4 = -\frac{1}{2}\,\varepsilon_1.$$

● $\quad \dfrac{2}{3} \geq \left| \dfrac{\varepsilon'_{(cd)}}{\varepsilon_{(bc)}} \right| \geq \dfrac{1}{4}$

$$\begin{cases} \varepsilon_1 = \varepsilon_{(bc)} \\ \varepsilon_5 = \varepsilon'_{(cd)} \end{cases}$$

$$\varepsilon_2 = -\frac{1}{5}(3\,\varepsilon_1 + 7\,\varepsilon_5); \quad \varepsilon_3 = -\frac{1}{5}\left(\frac{3}{2}\,\varepsilon_1 + \varepsilon_5\right); \quad \varepsilon_4 = -\frac{1}{5}\left(\frac{1}{2}\,\varepsilon_1 - 3\,\varepsilon_5\right).$$

● $\quad \dfrac{1}{4} > \left| \dfrac{\varepsilon'_{(cd)}}{\varepsilon_{(bc)}} \right|$

$$\begin{cases} \varepsilon_1 = -4\,\varepsilon'_{(cd)} \\ \varepsilon_5 = \varepsilon'_{(cd)} \end{cases}$$

$$\varepsilon_2 = \varepsilon'_{(cd)}; \quad \varepsilon_3 = \varepsilon'_{(cd)}; \quad \varepsilon_4 = \varepsilon'_{(cd)}.$$

### D) Recréation de détails fins $\quad (x \cdot y < 0)$

Pour ce traitement on reprend le même principe que précédemment, c'est-à-dire qu'on calcule les coordonnées des points de passage optimum:

$$P_i \text{ et } P_{i+1}.$$

$$P_i\,(t_i, P_{(bc)}) \text{ avec } \begin{cases} P_{(bc)} = C + \varepsilon_{(bc)} \\ \varepsilon_{(bc)} = \dfrac{x\,|y|}{|y| + |\alpha|} \end{cases}$$

$$P_{i+1}\,(t_i, P_{(cd)}) \text{ avec } \begin{cases} P_{(cd)} = C + \varepsilon'_{(cd)} \\ \varepsilon'_{(cd)} = \dfrac{y\,|x|}{|x| + |\beta|} \end{cases}$$

De la même façon, l'amplitude des sous pixels va dépendre directement des valeurs $\varepsilon_{(bc)}$ et $\varepsilon'_{(cd)}$ mais on doit tenir compte de l'amplitude absolue C du pixel P afin de limiter le traitement de façon à maintenir les valeurs des sous pixels recréés entre les tensions correspondant respectivement au noir photo et au blanc photo ($\Delta$ sera le coefficient de pondération). Il faut remarquer que, comme précédemment, il faut rajouter un test sur $(y \cdot \beta)$ et $(x \cdot \alpha)$ et si $\alpha$ ou $\beta$ sont nuls ils seront remplacés dans les calculs par respectivement $\alpha_0$ ou $\beta_0$.

— si $(y \cdot \beta < 0)$ ce qui correspondra, pour le pixel $P + 1$, à un traitement du type »recréation de détails fins« on doit étudier le rapport $\varepsilon'_{(de)}/\varepsilon_{(cd)}$ afin de situer le maximum du pic à recréer.

Si ce rapport est supérieur à 1,4 on devra remplacer dans les calculs qui suivent $\varepsilon'_{(cd)}$ par y.

— si $(x \cdot \alpha < 0)$ on remplacera, de la même façon, $\varepsilon_{bc}$ par $-x$ lorsque le rapport $\varepsilon_{(ab)}/\varepsilon'_{(bc)}$ sera supérieur à 1,4.

Dans tous les calculs suivants on aura les Cj définis par:

$$\bigvee_j \in [1, 5] \text{ on a } C_j = C + \Delta \varepsilon_j.$$

Le traitement proprement dit s'eefectue alors comme suit:

- $\left| \dfrac{\varepsilon'_{(cd)}}{\varepsilon_{(bc)}} \right| > 1,4$

  $\varepsilon_1 = 2\,\varepsilon_{(bc)} - 4\,\varepsilon'_{(cd)}; \quad \varepsilon_2 = -2\,\varepsilon_{(bc)} + \varepsilon'_{(cd)}; \quad \varepsilon_3 = \varepsilon'_{(cd)}; \quad \varepsilon_4 = \varepsilon'_{(cd)}; \quad \varepsilon_5 = \varepsilon'_{(cd)}.$

- $1,4 \geq \left| \dfrac{\varepsilon'_{(cd)}}{\varepsilon_{(bc)}} \right| > 1,1$

  $\varepsilon_1 = 2\,\varepsilon_{(bc)} - 4\,\varepsilon'_{(cd)}; \quad \varepsilon_2 = -3\,\varepsilon_{(bc)} + 2\,\varepsilon'_{(cd)}; \quad \varepsilon_3 = \varepsilon_{(bc)}; \quad \varepsilon_4 = \varepsilon'_{(cd)}; \quad \varepsilon_5 = \varepsilon'_{(cd)}.$

- $1,1 \geq \left| \dfrac{\varepsilon'_{(cd)}}{\varepsilon_{(bc)}} \right| > 1$

  $\varepsilon_1 = \dfrac{1}{3}\,\varepsilon'_{(bc)}; \quad \varepsilon_2 = -2\,\varepsilon'_{(bc)}; \quad \varepsilon_3 = 0; \quad \varepsilon_4 = \dfrac{2}{3}\,\varepsilon'_{(bc)}; \quad \varepsilon_5 = \varepsilon'_{(bc)}.$

- $\left| \dfrac{\varepsilon'_{(cd)}}{\varepsilon_{(bc)}} \right| = 1$

  $\varepsilon_1 = \varepsilon'_{(cd)}; \quad \varepsilon_2 = 0; \quad \varepsilon_3 = -2\,\varepsilon'_{(cd)}; \quad \varepsilon_4 = 0; \quad \varepsilon_5 = \varepsilon'_{(cd)}.$

- $1 > \left| \dfrac{\varepsilon'_{(cd)}}{\varepsilon_{(bc)}} \right| \geq 0,9$

  $\varepsilon_1 = \varepsilon_{(bc)}; \quad \varepsilon_2 = \dfrac{2}{3}\,\varepsilon_{(bc)}; \quad \varepsilon_3 = 0; \quad \varepsilon_4 = -2\,\varepsilon_{(bc)}; \quad \varepsilon_5 = \dfrac{1}{3}\,\varepsilon_{(bc)}.$

- $0,9 > \left| \dfrac{\varepsilon'_{(cd)}}{\varepsilon_{(bc)}} \right| \geq 0,7$

  $\varepsilon_1 = \varepsilon_{(bc)}; \quad \varepsilon_2 = \varepsilon_{(bc)}; \quad \varepsilon_3 = \varepsilon'_{(cd)}; \quad \varepsilon_4 = 2\,\varepsilon_{(bc)} - 3\,\varepsilon'_{(cd)}; \quad \varepsilon_5 = -4\,\varepsilon_{(bc)} + 2\,\varepsilon'_{(cd)}.$

- $0,7 > \left| \dfrac{\varepsilon'_{(cd)}}{\varepsilon_{(bc)}} \right|$

Deux cas possibles doivent alors être envisagés:

si $\boxed{y \cdot \beta \leq 0}$

$\varepsilon_1 = \varepsilon_{(bc)}; \quad \varepsilon_2 = \varepsilon_{(bc)}; \quad \varepsilon_3 = \varepsilon_{(bc)}; \quad \varepsilon_4 = \dfrac{1}{3}\,\varepsilon_{(bc)} - 2\,\varepsilon'_{(cd)}; \quad \varepsilon_5 = -\dfrac{10}{3}\,\varepsilon_{(bc)} + 2\,\varepsilon'_{(cd)}.$

si $\boxed{y \cdot \beta > 0}$ on traite en bloc les deux pixels P et P + 1. Comme le pixel P + 1 a déjà été traité auparavant (traitement itératif) et que dans le cas présent l'on modifie les données calculées, il faut, avant la sortie des données, un tampon (ou buffer) qui contiendra les valeurs des cinq sous pixels correspondant au résultat du traitement du pixel P + 1, valeurs que l'on peut écraser au cours du traitement de P.

Ce traitement particulier de deux pixels simultanément sera traité dans la partie suivante:

## E) Traitement »recréation de détails fins« appliqué simultanément à deux pixels dans les cas de points doubles

$$(1) \; (y \neq 0)$$

Ce traitement complète le cas ci-dessus lorsque l'on répond à la condition $y \cdot \beta > 0$. Les cinq sous pixels recréés pour le pixel (d) vont s'écrire:

$$dj = d + \Delta \varepsilon dj \text{ avec } j \in [1, 5].$$

Pour parfaire le calcul, on calcule

$$\varepsilon'_{(de)} = \frac{\beta |y|}{|\beta_0| + |y|}$$

et on effectue les comparaisons suivantes:

● si $|\varepsilon'_{(de)}| \leq |y|$ les $\varepsilon_{dj}$ vont prendre les valeurs suivantes:

$$\varepsilon_{dl} = -3 \varepsilon'_{(de)}; \; \varepsilon_{d2} = 0; \; \varepsilon_{d3} = \varepsilon_{d4} = \varepsilon_{d5} = \varepsilon'_{(de)}$$

● si $|\varepsilon'_{(de)}| > |y|$ deux cas sont à envisager:

(a)  $\varepsilon'_{(de)}| + |y| \leq |\varepsilon_{(bc)}|$ les $\varepsilon_{dj}$ vont prendre

les mêmes valeurs que précédemment:

$$\varepsilon_{dl} = -3 \varepsilon'_{(de)}; \; \varepsilon_{d2} = 0; \; \varepsilon_{d3} = \varepsilon_{d4} = \varepsilon_{d5} = \varepsilon'_{(de)}.$$

(b)  $|\varepsilon'_{(de)}| + |y| > |\varepsilon_{(bc)}|$ et les $\varepsilon_{dj}$ se voient modifiés de la même façon suivante:

$$\varepsilon_{dl} = -3(\varepsilon_{(bc)} - y); \; \varepsilon_{d2} = 0; \; \varepsilon_{d3} = \varepsilon_{d4} = \varepsilon_{d5} = \varepsilon_{(bc)} - y.$$

$$(2) \; (y = 0)$$

Les points de référence utiles sont maintenant

$$P_i(t_i, P_{(bcd)}) \text{ et } P_{i+2}(t_{i+2}, P_{(cde)}) \text{ avec:}$$

$$\begin{cases} P_{(bcd)} = C + \varepsilon_{(bcd)} \\ \\ \varepsilon_{(bcd)} = -\dfrac{x|\beta|}{|\beta| + |\alpha|} \end{cases} \text{ et } \begin{cases} P_{(cde)} = C + \varepsilon'_{(cde)} \\ \\ \varepsilon'_{(cde)} = \dfrac{\beta|x|}{|\beta_0| + |x|} \end{cases}$$

car le point $P_{i+1}$ n'a pas de raison d'exister, y étant nul. Comme le point est double on prend comme hypothèse que le maximum du pic à recréer se trouve au milieu de ce grand pixel formé par P et P + 1. Les dix sous pixels seront notés: $C_1, C_2, C_3, C_4, C_5, d_1, d_2, d_3, d_4, d_5$, avec les $\varepsilon_j$ et les $\varepsilon_{dj}$ correspondants pour $j \varepsilon [1, 5]$.

Soit $\varepsilon = \inf(\varepsilon_{(bcd)}, \varepsilon'_{(cde)})$

alors:

$$\varepsilon_{1C} = \varepsilon; \; \varepsilon_{2C} = \varepsilon; \; \varepsilon_{3C} = \varepsilon; \; \varepsilon_{4C} = 0; \; \varepsilon_{5C} = -3 \varepsilon$$

$$\varepsilon_{1d} = -3 \varepsilon; \; \varepsilon_{2d} = 0; \; \varepsilon_{3d} = \varepsilon; \; \varepsilon_{4d} = \varepsilon; \; \varepsilon_{5d} = \varepsilon.$$

Remarque:

le coefficient de pondération $\Delta$ doit être calculé, dans toute cette partie de traitement, par rapport aux dix sous pixels et il sera donc le même pour P et P + 1.

### Calcul de $\Lambda$, coefficient de pondération

Soit M la valeur correspondant à un blanc photo, afin de pondérer les valeurs des Cj il faut calculer $\Lambda$, facteur de pondération.

— si $x > 0$, on compare le plus grand écart $\varepsilon_j$ avec la différence M−C:

$$\sup \varepsilon_j \leq \text{M−C alors } \Lambda = 1$$

$$j = 1,5$$

$$\sup \varepsilon_j > \text{M−C alors} \qquad \Lambda = \frac{\text{M−C}}{\sup \varepsilon_j}$$

$$j = 1,5 \qquad\qquad j = 1,5$$

— si $x < 0$, on compare le plus grand écart $-\varepsilon_j$ avec C:

$$\sup (-\varepsilon_j) \leq \text{C alors} \qquad \Lambda = 1$$

$$j = 1,6$$

$$\sup (-\varepsilon_j) > \text{C alors} \qquad \Lambda = \frac{\text{C}}{\sup (-\varepsilon_j)}$$

$$j = 1,5 \qquad\qquad j = 1,5$$

En conclusion, trois remarques peuvent être effectuées:

— Les domaines d'application qui ont servi de limites pour l'étude des variations d'amplitude des sous pixels sont des résultats d'expériences et de calculs préliminaires qui prennent en compte les caractéristiques fondamentales d'un document iconographique. Les variations d'amplitudes des différents sous pixels ont été approximées, par morceaux, à des fonctions du premier degré et ce afin de faciliter le traitement qu'il soit analogique ou numérique. En modifiant les dérivées premières de ces fonctions, on peut jouer facilement sur l'efficacité du traitement tout en concervant la même valeur moyenne de densité.
— La deuxième remarque que l'on peut apporter concerne l'immunité aux parasites. La bande passante du signal analogique étant restreinte à environ 800 Hz, on peut en déduire que certaines transitions sont interdites et que l'observation du signal numérique, à la réception, permet d'éliminer la plupart des parasites gênants et présentant des transitions anormales comme, par exemple, les points foncés sur un fond clair. Pour une bande passante déterminée, il existe un seuil S qui ne peut être dépassé par la somme $|x| + |y|$ quand $x \cdot y < 0$.
On constate, à l'expérience, que dans le cas où $n = 5$, ce seuil peut être pris égal à 15.

— Il faut, comme dernière remarque, rappeler que le signal obtenu à la sortie du sytème de traitement servira à moduler en amplitude un signal à 1 800 Hz afin de pouvoir brancher un récepteur photo classique. Le 1 800 Hz sera asservi sur la fréquence mère $\Phi$ issue du modem afin d'éviter les interférences et effectue un filtrage naturel du signal modulant.

### F) Traitement dans le cas où l'on ne prend en compte que trois pixels

Dans ce cas, les seules valeurs prises en compte sont alors x et y qui jouent un rôle symétrique car si l'on inverse x et y il suffit de changer l'ordre des Cj.

$$x \cdot y = 0 - \text{les valeurs de C sont inchangées} - Cj = C.$$

$$x \cdot y > 0 - \text{tableau (1)} - \text{»transitions«.}$$

$$x \cdot y < 0 - \text{tableau (2)} - \text{»détails«.}$$

Tableaux de traitement utilisés:

Tableau 1

| $y \geq x$ | $C_1$ | $C_2$ | $C_3$ | $C_4$ | $C_5$ | |
|---|---|---|---|---|---|---|
| $1,5\,x > y \geq x$ | $C - x/2$ | $C - x/4$ | $C$ | $C + x/4$ | $C + x/2$ | |
| $2,5\,x > y \geq 1,5\,x$ | $C - \frac{2}{3}x$ | $C - \frac{1}{3}x$ | $C$ | $C + \frac{1}{3}x$ | $C + \frac{2}{3}x$ | |
| $4\,x > y \geq 2,5\,x$ | $C - x/2$ | $C - x/2$ | $C - x/4$ | $C$ | $C + \frac{5}{4}x$ | $x \cdot y > 0$ |
| $6\,x > y \geq 4\,x$ | $C - \frac{3}{4}x$ | $C - \frac{1}{2}x$ | $C - \frac{1}{4}x$ | $C$ | $C + \frac{3}{2}x$ | |
| $y \geq 6\,x$ | $C - x$ | $C - \frac{3}{4}x$ | $C - \frac{1}{2}x$ | $C - \frac{x}{4}$ | $C + \frac{5}{2}$ | |

Quand $x > y$ il suffit d'inverser l'ordre des Ci et de remplacer x par y dans le tableau 1.

Tableau 2

| $y > 0,\ x < 0$ | $C_1$ | $C_2$ | $C_3$ | $C_4$ | $C_5$ | |
|---|---|---|---|---|---|---|
| $-1,2\,x > y \geq -x$ | $C - x$ | $C$ | $C + 2x$ | $C$ | $C - x$ | |
| $-1,5\,x > y > -1,2\,x$ | $C - x/2$ | $C + 2x$ | $C$ | $C - x$ | $C - x$ | $x \cdot y < 0$ |
| $-y \geq -1,5\,x$ | $C + 3x$ | $C + x$ | $C - x$ | $C - \frac{3}{2}x$ | $C - \frac{3}{2}x$ | |

Dans le cas où <0 et x >0, il suffit d'inverser l'ordre des Ci et de remplacer x par y dans le tableau 2. Le signal de sortie sera borné par les niveaux correspondant respectivement au blanc photo et au noir photo.

## Revendications

1. Procédé pour la recréation d'un signal analogique de luminance à partir d'un signal numérique servant à la transmission, après conversion analogique/numérique, d'un signal de luminance représentatif d'un document à transmettre, caractérisé en ce qu'il consiste à prendre en compte, avant ou après la conversion N/A de la réception, un nombre p de pixels successifs et, en fonction de leurs amplitudes relatives et absolues, à traiter le pixel central en le décomposant en m sous pixels ayant des densités fonction de celles des pixels environnants.

2. Procédé selon la revendication 1, selon lequel on réalise, à l'émission, une compression des données par conversion lin/log et à la réception une conversion inverse log/lin, caractérisé en ce que la susdite prise en compte s'effectue avant la conversion log/lin de la réception.

3. Procédé selon l'une des revendications 1 et 2, caractérisé en ce que la valeur moyenne de la densité du pixel initial à traiter est conservée et est redistribuée sur les sous pixels correspondants recréés selon la relation:

$$C = \frac{\sum_{j=1}^{m} Cj}{m}$$

dans laquelle:

C représente l'amplitude absolue du pixel central à créer,
Cj représente l'amplitude des sous pixels créés,
m représente le nombre de sous pixels.

4. Procédé selon l'une des revendications précédentes, caractérisé en ce que le nombre de pixels pris en compte est au moins égal à trois, à savoir le pixel P à traiter, le pixel précédent P−1 et le pixel suivant P + 1, le pixel P faisant un écart de quantification x par rapport au pixel P−1 et un écart de quantification y par rapport au pixel P+1, et en ce que la quantification des sous pixels créés pour le traitement du pixel P s'effectue alors comme suit:

— dans le cas où le produit xy est égal à zéro, les valeurs des amplitudes Cj des sous pixels sont inchangées et demeurent égales à l'amplitude absolue du pixel P à traiter;
— dans le cas où le produit x · y est positif, les valeurs des amplitudes Cj des sous pixels sont calculées de manière à assurer une transition en palier entre les pixels P−1 et P+1, dont l'allure déterminée expérimentalement varie en fonction de l'écart entre les valeurs x et y;
— dans le cas où le produit x · y est négatif, les valeurs des amplitudes Cj des sous pixels sont calculées de manière à assurer une recréation de détails fins par une transition présentant un maximum ou un minimum dont la forme, déterminée expérimentalement, varie en fonction de l'écart entre les valeurs x et y.

5. Procédé selon l'une des revendications 1, 2 et 3, caractérisé en ce que le nombre de pixels pris en compte est égal à cinq, à savoir, le pixel P à traiter, précédé par les pixels P−1 et P−2 et suivi par les pixels P+1 et P+2, le pixel P faisant un écart de quantification x par rapport au pixel P−1 et un écart de quantification y par rapport au pixel P+1, tandis que le pixel P−2 fait un écart de quantification $\alpha$ avec le pixel P−1 et le pixel P+2, un écart de quantification $\beta$ avec le pixel P+1, et en ce que la quantification des sous pixels créés pour le traitement du pixel P s'effectue alors comme suit:

— dans le cas où l'écart de quantification x est égal à zéro, les valeurs des amplitudes Cj des sous pixels sont inchangées et demeurent égales à l'amplitude absolue du pixel P à traiter;
— dans le cas où l'écart de quantification est différent de zéro, plusieurs solutions sont alors envisagées:

a) le produit x · y est égal à zéro:

— si $\beta$ x = 0 les valeurs des amplitudes Cj des sous pixels sont inchangées et demeurent égales à l'amplitude absolue du pixel P à traiter sauf dans le cas où l'écart de quantification |x| est inférieur ou égal à une valeur prédéterminée (par exemple 1), les amplitudes Cj variant dans ce cas selon une équation linéair du type:

$$Cj = C - \frac{m+1-j}{m+1}\ x$$

dans laquelle:

C  est l'amplitude absolue du pixel P,
j  est le numéro du sous pixel,
m  est le nombre de sous pixels du pixel P,

— si $\beta$ x > 0 les valeurs des amplitudes Cj des sous pixels sont inchangées et demeurent égales à l'amplitude du pixel P à traiter,
— si $\beta$ · x < 0 les valeurs des amplitudes Cj des sous pixels sont calculées de manière à assurer une recréation de détails fins pour les pixels P et P + 1 à la fois, car on est alors en présence de points doubles;

b) dans le cas où x · y est négatif, les valeurs des amplitudes Cj des sous pixels sont calculées de manière à assurer une recréation de détails fins pour le pixel P et, éventuellement, pour les pixels P et P + 1;

c) dans le cas où x · y est positif, les valeurs des amplitudes Cj des sous pixels sont calculées de manière à assurer une transition en palier entre P−1 et P+1.

6. Procédé selon la revendication 5, caractérisé en ce que, pour effectuer une transition en palier entre le pixel P−1 et le pixel P+1, on définit les points de passage optimal $P_{(bc)} = C + \varepsilon_{(bc)}$ et $P_{(cd)} = C + \varepsilon'_{(cd)}$ pour les transitions P−1 → P et P → P+1, avec

$$\varepsilon_{(bc)} = -\ \frac{x\,|y|}{|y|+|\alpha|}\ \text{et}$$

$$\varepsilon'_{(cd)} = -\ \frac{y\,|x|}{|x|+|\beta|}$$

15

et on détermine l'amplitude de tous les sous pixels à créer en fonction du rapport

$$\frac{\varepsilon_{(bc)}}{\varepsilon'_{(cd)}} .$$

7. Procédé selon l'une des revendications 5 et 6, caractérisé en ce que, pour effectuer une recréation de détails fins, l'amplitude des sous pixels est déterminée en fonction des valeurs $\varepsilon_{(bc)}$ et $\varepsilon'_{(cd)}$ mais en tenant compte de l'amplitude absolue du pixel P afin de limiter le traitement de façon à maintenir les valeurs des sous pixels recréés entre les tensions correspondant respectivement au noir photo et au blanc photo.

8. Application du procédé selon la revendication 1 à un dispositif pour la recréation, après transmission numérique d'un signal analogique tel que, par exemple, le signal issu d'un analyseur de type Belin, ce dispositif comprenant:

a)   au niveau de la partie émettrice:

   — un convertisseur linéaire/logarithmique (8) recevant ledit signal analogique préalablement démodulé;
   — un ensemble formé par deux intégrateurs (10) montés en parallèle à la sortie dudit convertisseur (8) et travaillant en alternance, cet ensemble permettant d'intégrer la totalité du signal de luminance que délivre chaque pixel.
   — un convertisseur analogique-numérique (5) relié à la sortie du susdit ensemble par l'intermédiaire d'un échantillonneur bloqueur (11) destiné à stocker le signal fourni par l'un ou l'autre des deux intégrateurs (8) pendant le temps nécessaire à la conversion analogique-numérique relative à chaque pixel, et
   — un interface parallèle/série (12) permettant de sérialiser le signal numérique représentant la valeur de chacun des pixel et de le transmettre à un multiplexeur (13) et/ou un modem permettant d'attaquer la ligne de transmission (14) selon les normes en vigueur.

b)   au niveau de la partie réceptrice:

   — un convertisseur série/parallèle (16) recevant le signal numérique série émanant de la ligne de transmission (14);
   — un convertisseur numérique-analogique (21) relié à la sortie du convertisseur série-parallèle (16).
   — un convertisseur logarithme-linéaire (22) permettant de traiter le signal obtenu par le convertisseur numérique-analogique (21) de manière à obtenir en sortie un signal exponentiel, identique au signal analogique démodulé transmis à l'entrée de la partie émettrice.

Le traitement conforme au procédé selon l'invention pouvant être effectué en amont ou en aval du convertisseur numérique-analogique.

9. Application selon la revendication 8, caractérisée en ce que en vue d'éviter les interférences qui se traduisent par des moirages sur le document reconstitué, le modulateur 25 est asservi à l'horloge du modem 13.

10. Application selon la revendication 8, caractérisée en ce que le signal modulé fourni par l'émetteur (1) est transmis au convertisseur linéaire/logarithmique (8) par l'intermédiaire d'un circuit de démodulation, de détection de blanc (4) et de mise à niveau, ce circuit comprenant en série entre l'émetteur (1) et le convertisseur linéaire logarithmique (8), un amplificateur à gain variable (2) et un redresseur double alternance (7) un dispositif de commutation (9) étant prévu entre le redresseur double alternance (7), le convertisseur linéaire logarithmique (8) et/ou la ligne de transmission (14).

11. Application selon la revendication 8, caractérisée en ce que la partie émettrice comprend un circuit agissant sur le dispositif de commutation (9) pour interrompre la liaison entre le redresseur double alternance et le convertisseur linéaire-logarithmique en l'absence d'une émission de l'émetteur.

12. Application selon la revendication 8, caractérisée en ce que la partie émettrice comprend un circuit permettant:

   — de détecter la présence d'un signal de blanc émis au début de l'émission (bloc 4);
   — d'ajuster le gain de l'amplificateur à gain variable (2) pour que celui-ci délivre un signal dont l'amplitude soit égale à la valeur maximale que puisse admettre le convertisseur analogique-numérique (5);
   — de mémoriser le signal déterminant le gain de l'amplificateur (2) de sorte que ce gain reste identique tout au long de la transmission, et,
   — à connecter la liaison entre le redressur double alternance (7) et le convertisseur linéaire-logarithmique (8) lorsque le verrouillage du gain de l'amplificateur (2) est réalisé.

13. Application selon la revendication 8, caractérisée en ce qu'elle comprend un écrêteur permettant d'aligner l'amplitude du niveau de blanc du signal de lecture au niveau de blanc préalablement établi, dans le cas ou ladite amplitude du signal de lecture est supérieure à celle du niveau de blanc préalablement établi.

14. Application selon la revendication 8, caractérisée en ce que la partie émettrice comprend un circuit permettant de générer, après le susdit verrouillage de gain et avant le traitement numérique du document:

a) un mot binaire redondant servant de signal de synchronisation à la partie réceptrice pour que celle-ci puisse reconnaître le début et la fin d'un mot binaire quantifiant un pixel (bloc 6);

b) éventuellement un mot de reconnaissance qui, suivant le code employé, pourra ou non autoriser le récepteur à recevoir le message (bloc 6').

15. Application selon la revendication 8, caractérisée en ce que la partie réceptrice comprend en outre:

— un circuit permettant de décoder le mot de reconnaissance qui, suivant le code employé autorisera ou non le récepteur à recevoir le signal transmis par la ligne (bloc 17);

— un décodeur (18) de mot de synchronisation destiné à transmettre un signal de remise à zéro de l'horloge pilotant le convertisseur numérique-analogique (21).

16. Application selon la revendication 8, caractérisée en ce que la partie réceptrice comprend en outre, un cicuit (27) de détection image qui court-circuite la sortie du convertisseur (22).

17. Application selon la revendication 8, caractérisée en ce que dans le cas ou elle est réalisée à l'aide de microprocesseurs l'ordre des traitements effectués sur le signal est modifié de la façon suivante:

— dans la partie réceptrice, les traitements effectués sur le signal s'effectuent en amont du convertisseur numérique-analogique.

— dans la partie émettrice, les traitements effectués sur le signal s'effectuent en aval du convertisseur analogique-numérique.

## Patentansprüche

1. Verfahren zum Rekonstruieren eines analogen Helligkeitssignals aus einem numerischen Signal, welches nach Analog/Digital-Umwandlung zum Übertragen eines das zu übertragende Dokument darstellenden Helligkeitssignals dient, dadurch gekennzeichnet, daß vor oder nach einer D/A-Umwandlung des Empfangsignals eine Anzahl p aufeinanderfolgender Pixel in Abhängigkeit von ihren relativen und absoluten Amplituden in Rechnung genommen wird und daß das zentrale Pixel dadurch behandelt wird, daß es in m Unterpixel zerlegt wird, welche eine Dichte aufweisen, die von jeder der benachbarten Pixel abhängig ist.

2. Verfahren nach Anspruch 1, bei welchem nach dem Abrufen die Daten durch lin/log-Umwandlung komprimiert werden und beim Empfang eine inverse log/lin-Umwandlung vorgenommen wird, dadurch gekennzeichnet, daß das in Rechnung nehmen vor der log/lin-Umwandlung beim Empfang vorgenommen wird.

3. Verfahren nach einem der Ansprüche 1 und 2, dadurch gekennzeichnet, daß der Mittelwert der Dichte des ursprünglichen zu behandelnden Pixels gespeichert und auf jene entsprechenden Unterpixel verteilt wird, welche nach der Gleichung

$$C = \frac{\sum\limits_{j=1}^{m} C_j}{m}$$

rekonstruiert wurden, in welcher

C die absolute Amplitude des zu bildenden zentralen Pixels,
Cj die Amplitude der gebildeten Unterpixel und
m die Anzahl der Unterpixel bedeutet.

4. Verfahren nach irgendeinem der vorgehenden Ansprüche, dadurch gekennzeichnet, daß die Anzahl der in Rechnung genommenen Pixel zumindest gleich ist 3, d. i. das zu behandelnde Pixel P, das vorhergehende Pixel P−1 und das folgende Pixel P+1, wobei das Pixel P gegenüber dem Pixel P−1 eine Größenabweichung x und gegenüber dem Pixel P+1 eine Größenabweichung y zeigt, und daß das Quantifizieren der für die Behandlung des Pixels P geschaffenen Unterpixel wie folgt vorgenommen wird:

— Falls das Produkt x · y gleich ist Null, bleiben die Werte der Amplituden Cj der Unterpixel unverändert und gleich der absoluten Amplitude des zu behandelnden Pixels P,

— falls das Produkt x · y positiv ist, werden die Werte der Amplituden Cj der Unterpixel solcherart berechnet, daß zwischen den Pixeln P−1 und P+1 ein Stufenübergang gewährleistet ist, dessen experimentell bestimmtes Verhalten in Abhängigkeit von der Abweichung zwischen den Werten x und y schwankt,

— falls das Produkt x · y negativ ist, werden die Werte der Amplituden Cj der Unterpixel so berechnet, daß eine Wiedergabe der feinen Details durch einen Übergang sichergestellt wird, welcher ein Maximum oder ein Minimum darstellt, dessen experimentell bestimmte Form in Abhängigkeit von der Abweichung zwischen den Werten x und y schwankt.

5. Verfahren nach einem der Ansprüche 1, 2 und 3, dadurch gekennzeichnet, daß die Anzahl der in Rechnung gestellten Pixel gleich ist 5, also dem zu behandelnden Pixel die Pixel P−1 und P−2 vorangehen und das zu behandelnde Pixel P von den Pixeln P+1 und P+2 gefolgt ist, wobei zwischen dem Pixel P und dem Pixel P−1 eine Größenabweichung x und zwischen dem Pixel P und dem Pixel P+1 eine Größenabweichung y besteht, wogegen zwischen dem Pixel P−2 und dem Pixel P−1 eine Größenabweichung $\alpha$ und zwischen dem Pixel P+2 und dem Pixel P+1 eine Größenabweichung $\beta$ besteht, und daß die Quantifizierung der für die Behandlung des Pixels P geschaffenen Unterpixels sodann folgendermaßen abläuft:

— Falls die Größenabweichung x gleich ist Null bleiben die Werte der Amplituden Cj der Unterpixel unverändert und gleich der absoluten Amplitude des zu behandelnden Pixels P,

— falls die Größenabweichung von Null verschieden ist, sind mehrere Lösungen in Betracht zu ziehen:

a) Falls das Produkt x · y gleich ist Null:

— Falls $\beta$ · x = 0, bleiben die Werte der Amplituden Cj der Unterpixel unverändert und gleich der absoluten Amplitude des zu behandelnden Pixels P, mit Ausnahme des Falles, in welchem die Größenabweichung |x| kleiner als ein vorbestimmter Wert (beispielsweise 1) oder gleich diesem Wert ist, wobei dann die Amplituden Cj nach einer linearen Gleichung der Art

$$Cj = C - \frac{m+1-j}{m+1}\, x$$

veränderlich sind, in welcher

C die absolute Amplitude des Pixels P,
j die Nummer des Unterpixels und
m die Anzahl der Unterpixel des Pixels P

bedeutet,

— falls $\beta$ · x > 0 ist, bleiben die Werte der Amplituden Cj der Unterpixel unverändert und gleich der Amplitude des zu behandelnden Pixels P,

— falls $\beta$ · x < 0 ist, werden die Unterpixel solcherart berechnet, daß für die Pixel P und P+1 gleichzeitig eine Wiederherstellung der feinen Details sichergestellt wird, da man dann Doppelpunkte vorfindet,

b) falls x · y negativ ist, werden die Werte der Amplituden Cj der Unterpixel solcherart berechnet, daß für das Pixel P und gegebenenfalls für die Pixel P und P+1 eine Wiederherstellung der feinen Einzelheiten gewährleistet ist,

c) falls x · y positiv ist, werden die Amplituden Cj der Unterpixel solcherart berechnet, daß zwischen P−1 und P+1 ein Stufenübergang gewährleistet ist.

6. Verfahren nach Anspruch 5, dadurch gekennzeichnet, daß zwecks Erzielung eines Stufenübergangs zwischen dem Pixel P−1 und dem Pixel P+1 die optimalen Übergangspunkte $P_{(bc)} = C + \varepsilon_{(bc)}$ und $P_{(cd)} = C + \varepsilon'_{(cd)}$ für die Übergänge P−1 → P und P → P+1 durch

$$\varepsilon_{(bc)} = -\frac{x\,|y|}{|y|+|\alpha|} \quad \text{und}$$

$$\varepsilon'_{(cd)} = -\frac{y\,|x|}{|x|+|\beta|}$$

definiert werden und dann die Amplitude aller zu bildender Unterpixel in Abhängigkeit des Verhältnisses

$$\frac{\varepsilon_{(bc)}}{\varepsilon'_{(cd)}} \ .$$

bestimmt werden.

7. Verfahren nach einem der Ansprüche 5 und 6, dadurch gekennzeichnet, daß zwecks Erzielung einer Wiederherstellung feiner Details die Amplitude der Unterpixel in Abhängigkeit von den Werten $\varepsilon_{(bc)}$ und $\varepsilon'_{(cd)}$ bestimmt wird, wobei jedoch die absolute Amplitude des Pixels P in Rechnung gestellt wird, um die Behandlung solcherart zu begrenzen, daß die Werte der wiederhergestellten Unterpixel zwischen jenen Spannungen liegen, welche dem Schwarzpegel bzw. dem Weißpegel des Fotos entsprechen.

8. Anwendung des Verfahrens gemäß Anspruch 1 auf eine Vorrichtung zum Rekonstruieren eines beispielsweise von einem Analysator des Typs Belin abgegebenen analogen Signals nach einer Digitalumwandlung, wobei diese Vorrichtung folgende Teile aufweist:

a)   Am Niveau des Sendeteils

   —   einen das zuvor demodulierte analoge Signal empfangenden linear/logarithmischen Wandler (8),
   —   eine von zwei parallel zum Ausgang des Wandlers (8) montierten und alternierend arbeitenden Integratoren (10) gebildete Einheit, welche es gestattet, die Gesamtheit des von jedem Pixel gelieferten Helligkeitssignals zu integrieren,
   —   einen an den Ausgang dieser Einheit über einen Durchlaßschalter (11) gelegten Analog/Digital-Wandler (5), wobei der Durchlaßschalter dazu bestimmt ist, das von dem einen oder dem anderen der beiden Integratoren (8) während der für die Analog/Digital-Umwandlung eines Pixels erforderlichen Zeit gelieferte Signal zu speichern und
   —   ein parallel/serielles Interface (12), welches es gestattet, das den Wert eines jeden Pixels darstellende Digitalsignal in eine serielle Folge umzuwandeln und einem Multiplexer (13) und/oder einem Modem zuzuführen, welcher es gestattet, die Übertragungsleitung (14) nach den bestehenden Normen anzusteuern.

b)   Am Niveau des Empfangsteils:

   —   einen Serie/Parallel-Wandler (16), welcher das von der Übertragungsleitung (14) ankommende digitalserielle Signal empfängt,
   —   einen Digital/Analog-Wandler (21), welcher an den Ausgang des Serie/Parallel-Wandlers (16) angeschlossen ist,
   —   einen logarithmisch-linearen Wandler (22), welcher es gestattet, das vom Digital/Analog-Wandler (21) erhaltene Signal solcherart zu behandeln, daß am Ausgang ein Exponentialsignal erhalten wird, welches mit dem am Eingang des Sendeteils auftretenden demodulierten Analogsignal identisch ist,

   wobei das erfindungsgemäße Verfahren vor oder hinter dem Digital/Analog-Wandler durchgeführt werden kann.

9. Anwendung nach Anspruch 8, dadurch gekennzeichnet, daß zwecks Vermeidung von Interferenzen, welche durch ein Moirée des rekonstruierten Dokuments übertragen werden, der Modulator (25) im Takt des Modem (13) gesteuert wird.

10. Anwendung nach Anspruch 8, dadurch gekennzeichnet, daß das vom Sender (1) gelieferte modulierte Signal an den linear/logarithmischen Wandler (8) über einen rückstellbaren Demodulatorkreis (4) zum Feststellen des Weißpegels zugeführt wird, wobei dieser Demodulatorkreis zwischen dem Sender (1) und dem linear/logarithmischen Wandler (8) eine Serienschaltung aus einem Verstärker (2) veränderlicher Verstärkung und einem Zweiweggleichrichter (7) aufweist, wobei zwischen dem Zweiweggleichrichter (7), dem linear/logarithmischen Wandler (8) und/oder der Übertragungsleitung (14) eine Kommutiereinrichtung (9) vorgesehen ist.

11. Anwendung nach Anspruch 8, dadurch gekennzeichnet, daß der Sendeteil einen Kreis aufweist, welcher auf die Kommutiereinrichtung (9) wirkt, um die Verbindung zwischen dem Zweiweggleichrichter und dem linear/logarithmischen Wandler bei Abwesenheit eines Ausgangssignals am Sender zu unterbrechen.

12. Anwendung nach Anspruch 8, dadurch gekennzeichnet, daß der Sendeteil einen Kreis aufweist, welcher es gestattet,

   —   das Auftreten eines Weißsignals am Beginn einer Signalangabe (Block 4) festzustellen,

— die Verstärkung des Verstärkers (2) veränderlicher Verstärkung einzustellen, damit dieser ein Signal abgibt, dessen Amplitude gleich ist dem vom Analog/Digital-Wandler (5) verarbeitbaren Maximalwert,

— das die Verstärkung des Verstärkers (2) bestimmende Signal solcherart zu speichern, daß diese Verstärkung über die ganze Übertragung identisch bleibt und

— die Verbindung zwischen dem Zweiggleichrichter (7) und dem linear/logarithmischen Wandler (8) herzustellen, sobald die Verstärkung des Verstärkers (2) verriegelt worden ist.

13. Anwendung nach Anspruch 8, dadurch gekennzeichnet, daß sie einen Amplitudenbegrenzer aufweist, welcher es gestattet, die Amplitude des Weißpegels des Lesesignals an den zuvor festgelegten Weißpegel dann anzupassen, wenn die Amplitude des Lesesignals größer ist als jene des zuvor festgelegten Weißpegels.

14. Anwendung nach Anspruch 8, dadurch gekennzeichnet, daß der Sendeteil einen Kreis aufweist, welcher es gestattet, nach dem Verriegeln der Verstärkung und vor der numerischen Behandlung des Dokuments

a) ein binäres redundantes Wort zu erzeugen, welches als Synchronisiersignal am Empfangsteil dient, damit dieser den Beginn und das Ende eines ein Pixel (Block 6) quantifizierendes binäres Wort erkennen kann und

b) gegebenenfalls ein Erkennungswort zu erzeugen, welches je nach verwendetem Code den Empfänger beauftragen kann oder nicht beauftragen kann, eine Botschaft (Block 6') zu empfangen.

15. Anwendung nach Anspruch 8, dadurch gekennzeichnet, daß der Empfangsteil weiters

— einen Kreis aufweist, welcher es gestattet, das Erkennungswort zu decodieren, welches je nach verwendetem Code den Empfänger beauftragt oder nicht beauftragt, ein über die Leitung (Block 17) übertragenes Signal zu empfangen, und

— einen Decodierer (18) für das Synchronisierwort aufweist, welcher dazu bestimmt ist, ein Rückstellsignal auf Null des Taktgebers zu übertragen, welcher den Digital/Analog-Wandler (21) steuert.

16. Anwendung nach Anspruch 8, dadurch gekennzeichnet, daß der Empfangsteil weiters einen Kreis (27) zum Feststellen des Bildsignals aufweist, welcher den Ausgang des Wandlers (22) kurzschließt.

17. Anwendung nach Anspruch 8, dadurch gekennzeichnet, daß, falls sie mittels Mikroprozessoren verwirklicht wird, die Reihenfolge der am Signal vorgenommenen Behandlungen in folgender Weise abgeändert wird:

— Im Empfangsteil werden die am Signal vorgenommenen Behandlungen vor dem Digital/Analog-Wandler vorgenommen,

— im Sendeteil werden die am Signal vorgenommenen Behandlungen vor dem Analog/Digital-Wandler vorgenommen.

## Claims

1. A process for reconstructing an analog luminance signal from a digital signal serving for transmission, after analog/digital conversion, of a luminance signal representative of a document to be transmitted, characterized in that it consists in taking into account, before or after the digital/analog conversion at reception, a number p of successive pixels and, depending on their relative and absolute amplitudes, in treating the central pixel by breaking it down into m sub pixels having densities depending on those of the surrounding pixels.

2. The process according to claim 1, according to which, at emission, the data are compressed by lin/log conversion and at a reception by reverse log/lin conversion, characterized in that said taking into account is effected before the log/lin conversion at reception.

3. The process according to one of claims 1 and 2, characterized in that the mean value of the density of the initial pixel to be treated is kept and is redistributed over the corresponding sub pixels reconstructed according to the relationship:

$$C = \frac{\sum_{j=1}^{m} C_j}{m}$$

in which:

C    represents the absolute amplitude of the central pixel to be created,
Cj   represents the amplitude of the sub pixels created,
m    represents the number of sub pixels.

4. The process according to one of the preceding claims, characterized in that the number of pixels taken into account is at least equal to three, namely the pixel p to be treated, the preceding pixel p−1 and the following pixel p+1, the pixel p forming a quantization divergence x with respect to the pixel p−1 and a quantization divergence y with respect to the pixel p+1, and in that the quantization of the sub pixels created for the treatment of the pixel p is then carried out as follows:

— in the case where the product x · y is equal to zero, the values of the amplitudes Cj of the sub pixels are unchanged and remain equal to the absolute amplitudes of the pixel p to be treated;
— in the case where the product x · y is positive, the values of the amplitudes Cj of the sub pixels are calculated so as to ensure a level transition between pixels p−1 and p+1, whose trend determined experimentally varies as a function of the divergence between the values x and y;
— in the case where the product x · y is negative, the values of the amplitudes Cj of the sub pixels are calculated so as to ensure reconstruction of fine details by a transition presenting a maximum or a minimum whose shape, determined experimentally, varies as a function of the divergence between the values x and y.

5. The process according to one of claims, 1, 2 and 3, characterized in that the number of pixels taken into account is equal to five, namely the pixel p to be treated, preceded by the pixels p−1 and p−2 and followed by the pixels p+1 and p+2, pixel p forming a quantization divergence x with respect to pixel p−1 and a quantization divergence y with respect to pixel p+1, whereas the pixel p−2 forms a quantization divergence $\alpha$ with the pixel p−1 and pixel p+2, a quantization divergence $\beta$ with pixel p+1 and in that the quantization of the sub pixels created for the treatment of the pixel p is then carried out as follows:

— in the case where the quantization divergence x is equal to zero, the values of the amplitudes Cj of the sub pixels are unchanged and remain equal to the absolute amplitude of the pixel p to be treated;
— in the case where the quantization divergence is different from zero, several solutions are then envisaged:

a)   the product x · y is equal to zero:

— if $\beta$x = 0 the values of the amplitudes Cj of the sub pixels are unchanged and remain equal to the absolute amplitude of the pixel p to be treated except in the case where the quantization divergence |x| is less than or equal to a predetermined value (for example 1), the amplitudes Cj varying in this case according to a linear equation of the type:

$$Cj = C - \frac{m+1-j}{m+1}\, x$$

in which:

C    is the absolute amplitude of the pixel p,
j    is the number of the sub pixel,
m    is the number of sub pixels of pixel P,

— if $\beta$x > 0 the values of the amplitudes Cj of the sub pixels are unchanged and remain equal to the amplitude of the pixel p to be treated,
— if $\beta$ · x < 0 the values of the amplitudes Cj of the sub pixels are calculated so as to ensure reconstruction of fine details for the pixels p and p+1 at one and the same time, for we then have double points;

b)   in the case where x · y is negative, the values of the amplitudes Cj of the sub pixels are calculated so as to ensure reconstruction of fine details for pixel p and, possibly, for the pixels p and p+1;

c)   in the case where x · y is positive, the values of the amplitudes Cj of the sub pixels are calculated so as to ensure a level transition between p−1 and p+1.

21

6. The process according to claim 5, characterized in that, to effect a level transition between the pixel p−1 and the pixel p+1, the points of optimum passage

$$P_{(bc)} = C + \varepsilon_{(bc)} \text{ and } P_{(cd)} = C + \varepsilon'_{(cd)}$$

are defined for the transitions P−1 → P and P → P+1, with

$$\varepsilon_{(bc)} = - \frac{x |y|}{|y| + |\alpha|} \text{ and}$$

$$\varepsilon'_{(cd)} = - \frac{y |x|}{|x| |\beta|}$$

and the amplitude of all the sub pixels to be created is determined as a function of the ratio

$$\frac{\varepsilon_{(bc)}}{\varepsilon'_{(cd)}} .$$

7. The process according to one of claim 5 and 6, characterized in that, so as to provide reconstruction of fine details, the amplitude of the sub pixels is determined as a function of the values $\varepsilon_{(bc)}$ and $\varepsilon'_{(cd)}$ but taking into account the absolute amplitude of the pixel p so as to limit the processing in order to maintain the values of the sub pixel reconstructed between the voltages corresponding respectively to photoblack and to photowhite.

8. Application of the process according to claim 1 to a device for reconstructing, after digital transmission of an analog signal such, for example, as the signal from a Belin type scanner, this device comprising:

a) at the level of the transmitting part:

− a linear/logarithmic converter (8) receiving said previously demodulated analog signal,
− an assembly formed by two integrators (10) connected in parallel to the output of said convertor (8) and working alternately, this assembly allowing the whole of the luminance signal which each pixel delivers to be integrated,
− an analog-digital converter (5) connected to the output of said assembly through a disabling sampler (11) intended to store the signals supplied by one or other of the two integrators (8) during the time required for the analog/digital conversion relative to each pixel, and
− a parallel/series interface (12) for putting into serial form the digital signal representing the value of each of the pixels and transmitting it to a multiplexer (13) and/or a modem for driving the transmission line (14) in accordance with the standards in use,

b) at the level of the receiver part:

− a series-parallel convertor (16) receiving the series digital signal from the transmission line (14),
− a digital-analog converter (21) connected to the output of the series-parallel converter (16),
− a logarithm-linear converter (22) for processing the signal obtained by the digital-analog converter (21) so as to output an exponential signal identical to the demodulated analog signal transmitted to the input of the transmitter part.

The processing in accordance with the processor of the invention being able to be carried out upstream or downstream of the digital-analog converter.

9. Application according to claim 8, characterized in that so as to avoid the interferences which result in watery or wave like patterns on the reconstituted document, the modulator 25 is slaved to the clock of the modem 13.

10. Application according to claim 8, characterized in that the modulated signal supplied by the transmitter (1) is transmitted to the linear/logarithmic converter (8) through a demodulation, white detection (4) and levelling circuit, this circuit comprising in series between the transmitter (1) and the linear/logarithmic converter (8), a variable gain amplifier (2) and a full wave rectifier (7) a switching device (9) being provided between the full wave rectifier (7), the linear/logarithmic converter (8) and/or the transmission line (14).

11. Application according to claim 8, characterized in that the transmitter part comprises a circuit acting on the switching device (9) for interrupting the connection between the full wave rectifier and the linear-logarithmic converter in the absence of a transmission from the transmitter.

12. Application according to claim 8, characterized in that the transmitter part comprises a circuit for:

- detecting the presence of the white signal transmitted at the beginning of the transmission (block 4);
- adjusting the gain of the variable gain amplifier (2) so that this latter delivers a signal whose amplitude is equal to the maximum value which the analog-digital converter (5) can permit;
- storing the signal determining the gain of the amplifier (2) so that this gain remains identical throughout the transmission, and
- connecting the connection between the full wave rectifier (7) and the linear-logarithmic converter (8) when locking of the gain of the amplifier (2) is achieved.

13. Application according to claim 8, characterized in that it comprises a chopper for aligning the amplitude of the white level of the reading signal to the white level previously established, in the case where said amplitude of the reading signal is greater than that of the previously established white level.

14. Application according to claim 8, characterized in that the transmitter part comprises a circuit for generating, after said gain locking and before the digital processing of the document:

a) a redundant binary word serving as synchronizing signal for the receiver part so that this latter may recognize the beginning and the end of a binary word quantizing a pixel (block 6);

b) possibly a recognition word which, depending on the code used, may or may not authorize the receiver to receive the message (block 6').

15. Application according to claim 8, characterized in that the receiver part further comprises:

- a circuit for decoding the recognition word which, depending on the code used, will authorize the receiver or not to receive the signal transmitted by the line (block 17);
- a decoder (18) of the synchronizing word for transmitting a signal for resetting the clock driving the digital-analog converter (21).

16. Application according to claim 8, characterized in that the receiver part further comprises an image detection circuit (27) which short circuits the output of the converter (22).

17. Application according to claim 8, characterized in that in the case where it is achieved by means of microprocessors, the order of the processing carried out on the signal is modified in the following way:

- in the receiver part, the processing carried out on the signal is effected upstream of the digital-analog convertor,
- in the transmitter part, the processing carried out on the signal is effected downstream of the analog-digital convertor.

Fig.1

0 065 454

Fig. 2

0 065 454

Fig. 3

Fig. 4

Fig. 5

Fig. 6

Fig. 7